# EUROPÄISCHE PATENTANMELDUNG

(11) **EP 2 918 564 A1**
(43) Veröffentlichungstag der Anmeldung: **16.09.2015**
(21) Anmeldenummer: 14159478.8
(22) Anmeldetag: 13.03.2014
(51) Int. Cl.: C04B 35/01, C04B 35/04, C04B 35/047, C04B 35/105, C04B 35/12, C04B 35/42, C04B 35/48, C04B 35/63, C04B 35/66

(54) **Feuerfeste Materialien enthaltend einen Mischkristall mit Spinell-Struktur**

(71) Anmelder: LANXESS Deutschland GmbH, 50569 Köln (DE)
(72) Erfinder: Ortmann, Rainer, 50859 Köln (DE); Boll, Matthias, Newcastle 2940 (ZA); Strasser, Hans, 47495 Rheinberg (DE); Friedrich, Holger, 47799 Krefeld (DE)

(57) **Zusammenfassung**

Feuerfeste Materialien, erhalten durch Erhitzen einer Mischung Z auf wenigstens 250 °C, bevorzugt auf wenigstens 350 °C, dadurch gekennzeichnet, dass die Mischung Z folgende Komponenten enthält:
• 65 bis 97 Gew.-%, bevorzugt 80 bis 97 Gew.-% einer Komponente A, wobei die Gew.-%-Angaben auf die Gesamtmasse der Komponenten A, B und, sofern vorhanden, C in der Mischung Z bezogen sind, die zu wenigstens 80 Gew.-%, bevorzugt zu wenigstens 90 Gew.-%, wobei die Gew.-%-Angaben auf die Komponente A bezogen sind, aus einem oder mehreren der Oxide ausgewählt aus der Gruppe bestehend aus Al₂O₃, ZrO₂, BeO, MgO, TiO₂, Fe₂O₃, Cr₂O₃, La₂O₃, Ta₂O₅ und SnO₂ besteht, und
• 2 bis 30 Gew.-%, bevorzugt 3 bis 15 Gew.-% einer Komponente B, wobei die Gew.-%-Angaben auf die Gesamtmasse der Komponenten A, B und, sofern vorhanden, C in der Mischung Z bezogen sind, und die Komponente B zu wenigstens 80 Gew.-%, bevorzugt zu wenigstens 85 Gew.-%, besonders bevorzugt zu wenigstens 90 Gew.-%, wobei die Gew.-%-Angaben auf die Komponente B bezogen sind, einen Mischkristall mit Spinell-Struktur enthält, der wenigstens die Oxide Fe₂O₃, Al₂O₃, MgO und Cr₂O₃ enthält, und
• 0 bis 25 Gew.-%, bevorzugt 0 bis 15 Gew.-% einer Komponente C, wobei die Gew.-%-Angaben die Gesamtmasse der Komponenten A, B und, sofern vorhanden, C in der Mischung Z bezogen sind, die zu wenigstens 86 Gew.-%, bevorzugt zu wenigstens 92 Gew.-%, wobei die Gew.-%-Angaben auf die Komponente C bezogen sind, Kohlenstoff enthält.

## Beschreibung

Die vorliegende Erfindung betrifft feuerfeste Materialien, die durch Erhitzen einer Mischung Z, enthaltend einen Mischkristall mit Spinell-Struktur, auf wenigstens 250 °C erhalten werden, sowie die Verwendung dieser feuerfesten Materialien für die Auskleidung von Anlagen für thermische Prozesse sowie von Transportgefäßen, für den Bau von Konstruktionselementen und für die Wärmerückgewinnung und Wärmedämmung.

Feuerfeste Materialien haben zumeist keinen eindeutigen Schmelzpunkt, sondern schmelzen beziehungsweise erweichen innerhalb eines mehr oder weniger engen Temperaturbereiches. Anstelle des Schmelzpunktes wird deshalb ein beim Erweichen feststellbarer Punkt durch die Prüfung des Seger-Kegel-Fallpunktes bestimmt. Aufgrund ihrer Beständigkeit bei hohen Temperaturen werden sie meist als Werkstoffe und Erzeugnisse zur Auskleidung von wärmetechnischen Anlagen der Grundstoffindustrie eingesetzt.

Feuerfeste Materialien können aus hoch schmelzenden Oxiden, Silicaten, Carbiden, Nitriden und anderen Materialien bestehen. Jedoch behalten einige dieser feuerfesten Materialien ihre Feuerfestigkeit nur in reduzierender Atmosphäre, wie beispielsweise metallische Nitride und reiner Kohlenstoff.

Für ihre Anwendung bei hohen Temperaturen ist es besonders wichtig, dass die feuerfesten Materialien neben ihrer Eigenschaft der Feuerfestigkeit als thermischmechanische Eigenschaft bevorzugt noch weitere mechanische Eigenschaften aufweisen. Bei ihrer Verwendung, beispielsweise als. Auskleidung von Anlagen für thermische Prozesse, müssen die feuerfesten Materialien stabil gegenüber Verschleiß sein, was eine hohe Festigkeit erfordert.

Als mechanische Eigenschaft ist die Festigkeit sowohl bei Raumtemperatur als auch bei hohen Temperaturen von großer Bedeutung. Die Abriebfestigkeit der feuerfesten Materialien steigt mit steigender Kalt- bzw. Heißdruckfestigkeit und ist ein Maß für die Festigkeit des feuerfesten Materials. Die Kaltdruckfestigkeit ist die Höchstkraft pro Flächeneinheit, die ein feuerfestes Material bei Raumtemperatur aufweist, bevor es bricht. Die Heißdruckfestigkeit gibt an, bei welchem Druck und welcher hohen Temperatur das feuerfeste Material bricht.

Somit ist es generell erstrebenswert, feuerfeste Materialien mit einer hohen Festigkeit zu erhalten.

Eine Erhöhung der Kaltdruckfestigkeit wurde beispielsweise durch Zusatz von SiC zu Keramiken aus Aluminiumoxid-haltigen Gießmassen festgestellt (Zawrah et al., Advances in Applied Ceramics (2005), 104(6), S. 312-317). Dabei konnte durch einen Zusatz von 8 Gew.-% SiC zu der Aluminiumoxid-haltigen Gießmasse nahezu eine Verdoppelung der Kaltdruckfestigkeit der Keramiken festgestellt werden.

Auch der Zusatz von Titandioxid (TiO₂) zu einer Mischung, die aus 90% Magnesit (MgCO₃) und 10% Chromerz (idealisiert: FeCr₂O₄) hergestellt wurde, führte zu einem Anstieg der Kaltdruckfestigkeit der aus dieser Mischung erhaltenen Feuerfeststeine (Kalpakli, Refractories and Industrial Ceramics (2008), 49(4), S. 314-319), wobei die optimale TiO₂-Zusatzmenge bei 3 Gew.-% lag.

Die Kaltdruckfestigkeit von reinem Korundmaterial (α-Al₂O₃) konnte durch den Zusatz von Magnesium-Aluminium-Spinellen nicht erhöht werden (Ding et al., Key Engineering Materials (2013), 544, Testing and Evaluation of Inorganic Materials III, S. 316-320). Der Zusatz von 15 Gew.-% und 30 Gew.-% Magnesium-Aluminium-Spinell zu reinem Korundmaterial führte nach deren Erhitzen für 3 Stunden bei 1100 °C und für 3 Stunden bei 1400 °C zu Proben mit geringeren Kaltdruckfestigkeiten als Proben aus reinem Korundmaterial ohne Zusatz der Magnesium-Aluminium-Spinelle.

Chromerzrückstände - im englischen auch als Chromite Ore Processing Residue, COPR, bezeichnet - fallen als Nebenprodukte bei der Gewinnung von Chromchemikalien ausgehend von Chromit, Chromeisenstein, an. Wenn der Chromerzrückstand in seiner ausgelaugten Form und ohne entsprechende zusätzliche Behandlung deponiert wird - wie es früher oftmals der Fall war - können noch über Jahrzehnte hinweg die schwerlöslichen Cr(VI)-Verbindungen langsam herausgelöst werden und somit Cr(VI) in die Umwelt gelangen. Deshalb sind das Grundwasser und das Erdreich um viele Chromerzrückstands-Deponien herum hochgradig mit Cr(VI) belastet. Aber auch wenn das Cr(VI) in dem COPR mittels eines Reduktionsverfahrens in unbedenkliches Cr(III) überführt werden kann, wäre es dennoch von Vorteil, sowohl eine Wiederverwertungsmöglichkeit für das COPR als auch für das reduzierte COPR zu finden, sodass es keiner Deponierung mehr bedarf.

Anwendung haben solche Chromerzrückstände bereits bei der Herstellung von Dachziegeln auf Basis von tonkeramischen Rohstoffen (JP 5992968 A) sowie als Farbstoff (Schwarz- und Braunpigmente) für Keramiken ebenfalls auf Basis tonkeramischer Rohstoffe (JP 58225158 A, JP 62036061 A) gefunden. Hintergrund der Beimischung des Chromerzrückstandes zu den tonkeramischen Rohstoffen, d.h. zu den Rohstoffen auf Basis von Silikaten und Alumosilikaten, in diesen drei Anmeldungen ist die Herstellung von Ziergegenständen, wobei ästhetische Aspekte sowohl der Dachziegel als auch der schokoladenfarbigen Keramiken im Vordergrund stehen. Bezüglich der Dachziegel wird zwar auch die Frostbeständigkeit als Aufgabe genannt, jedoch zielen diese Beimischungen keinesfalls auf den Erhalt von feuerfesten Materialien ab. Auch Eigenschaften wie Korrosionsbeständigkeit werden von diesen hier beschriebenen Materialien nicht verlangt. Die in diesen Anmeldungen verwendeten Tone sintern zudem bereits bei Temperaturen unterhalb von 1500 °C, bei grobkeramischen Ziegeltonen bereits bei unter 1000 °C, sodass diese Erzeugnisse nicht als feuerfeste Materialien anzusehen sind. Die Definition der feuerfesten Materialien im Rahmen der vorliegenden Erfindung findet sich weiter unten.

DE 692523 A beschreibt das Zumischen von Chromerzrückstand, wie er bei dem alkalischen Aufschluss von Chromerzen anfällt, zu Tonerdesolen für die Herstellung von selbsterhärtenden Mörtel, Stampf-, Flick- und Anstrichmassen. In Tonerdesolen liegt Aluminiumoxid nicht als Feststoff, sondern in feinster Verteilung im wässrigen Medium vor. Die Tonerdesolen mit dem zugemischten Chromerzrückstand sind selbsthärtend und liefern ohne Erhitzen der Mischung, sondern lediglich durch hydraulisches Abbinden, die gehärteten Massen, die eine Art Zement darstellen. Der Chromerzrückstand muss vor dem Mischen mit den Tonerdesolen erst einer Glühbehandlung und anschließend einer Mahlung unterzogen werden. Da der eingesetzte Chromerzrückstand keiner Reduktion unterzogen wird, bleibt Cr(VI), welches in Chromerzrückständen generell vorhanden ist, auch in den selbsthärtenden Mörtel, Stampf-, Flick- und Anstrichmassen enthalten. Diese zeichnen sich durch eine gute Wärmeleitfähigkeit und Temperaturwechselbeständigkeit aus, wobei Korrosionsbeständigkeit von den hier beschriebenen Materialien nicht verlangt wird.

Die Aufgabe der vorliegenden Erfindung war es, feuerfeste Materialien auf Basis einer speziellen Mischung bereitzustellen, wobei die feuerfesten Materialien vorzugsweise eine hohe Festigkeit aufweisen sollten. Zudem sollten die feuerfesten Materialien vorzugsweise eine hohe Korrosionsbeständigkeit aufweisen. In der speziellen Mischung, aus der die feuerfesten Materialien erhalten werden sollten, sollte des Weiteren SiO₂ nicht die Hauptkomponente darstellen. Die feuerfesten Materialien sollten bevorzugt für den industriellen Einsatz für die Auskleidung von Anlagen für thermische Prozesse (Schmelz-, Brenn- und Wärmebehandlungsanlagen) sowie von Transportgefäßen, für den Bau von Konstruktionselementen wie verschleißfesten, technischen und/ oder mechanischen Bauteilen, für die Wärmerückgewinnung und für die Wärmedämmung geeignet sein.

Überraschenderweise konnte gefunden werden, dass die Lösung der gestellten Aufgabe gelingt durch feuerfeste Materialien, erhalten durch Erhitzen einer Mischung Z auf wenigstens 250 °C, bevorzugt auf wenigstens 350 °C, dadurch gekennzeichnet, dass die Mischung Z folgende Komponenten enthält:
- 65 bis 97 Gew.-%, bevorzugt 80 bis 97 Gew.-% einer Komponente A, wobei die Gew.-%-Angaben auf die Gesamtmasse der Komponenten A, B und, sofern vorhanden, C in der Mischung Z bezogen sind, die zu wenigstens 80 Gew.-%, bevorzugt zu wenigstens 90 Gew.-%, wobei die Gew.-%-Angaben auf die Komponente A bezogen sind, aus einem oder mehreren der Oxide ausgewählt aus der Gruppe bestehend aus Al₂O₃, ZrO₂, BeO, MgO, TiO₂, Fe₂O₃, Cr₂O₃, La₂O₃, Ta₂O₅ und SnO₂ besteht, und
- 2 bis 30 Gew.-%, bevorzugt 3 bis 15 Gew.-% einer Komponente B, wobei die Gew.-%-Angaben auf die Gesamtmasse der Komponenten A, B und, sofern vorhanden, C in der Mischung Z bezogen sind, und die Komponente B zu wenigstens 80 Gew.-%, bevorzugt zu wenigstens 85 Gew.-%, besonders bevorzugt zu wenigstens 90 Gew.-%, wobei die Gew.-%-Angaben auf die Komponente B bezogen sind, einen Mischkristall mit Spinell-Struktur enthält, der wenigstens die Oxide Fe₂O₃, Al₂O₃, MgO und Cr₂O₃ enthält, und
- 0 bis 25 Gew.-%, bevorzugt 0 bis 15 Gew.-% einer Komponente C, wobei die Gew.-%-Angaben auf die Gesamtmasse der Komponenten A, B und, sofern vorhanden, C in der Mischung Z bezogen sind, die zu wenigstens 86 Gew.-%, bevorzugt zu wenigstens 92 Gew.-%, wobei die Gew.-%-Angaben auf die Komponente C bezogen sind, Kohlenstoff enthält.

"Feuerfeste Materialien" im Sinne dieser Erfindung sind Materialien, die einen Seger-Kegel-Fallpunkt von mindestens 1500 °C haben (Feuerfestigkeit gemäß DIN 51060 mit Verweis auf DIN EN 993-12 und DIN EN 993-13).

Die "Mischung Z" im Rahmen dieser Erfindung enthält die Komponenten A und B und kann gegebenenfalls weitere Komponenten wie beispielsweise Komponente C und/ oder Komponente D enthalten, deren detaillierte Beschreibung weiter unten erfolgt. Die erfindungsgemäß einzusetzende Mischung Z enthält bevorzugt insgesamt weniger als 11 Gew.-% SiO₂, bevorzugt weniger als 5 Gew.-% SiO₂, wobei die Gew.-%-Angaben auf die Gesamtmasse der Komponenten A, B und, sofern vorhanden, C in der Mischung Z bezogen sind.

### Komponente A

Die erfindungsgemäßen feuerfesten Materialien werden erhalten durch Erhitzen der erfindungsgemäß einzusetzenden Mischung Z, die folgende Komponente A enthält:
- 65 bis 97 Gew.-%, bevorzugt 80 bis 97 Gew.-% einer Komponente A, wobei die Gew.-%-Angaben auf die Gesamtmasse der Komponenten A, B und, sofern vorhanden, C in der Mischung Z bezogen sind, die zu wenigstens 80 Gew.-%, bevorzugt zu wenigstens 90 Gew.-%, wobei die Gew.-%-Angaben auf die Komponente A bezogen sind, aus einem oder mehreren der Oxide ausgewählt aus der Gruppe bestehend aus Al₂O₃, ZrO₂, BeO, MgO, TiO₂, Fe₂O₃, Cr₂O₃, La₂O₃, Ta₂O₅ und SnO₂ besteht.

Bevorzugt besteht die Komponente A zu wenigstens 80 Gew.-%, bevorzugt zu wenigstens 90 Gew.-%, wobei die Gew.-%-Angaben auf die Komponente A bezogen sind, aus einem oder mehreren der Oxide ausgewählt aus der Gruppe bestehend aus Al₂O₃, MgO, Fe₂O₃ und Cr₂O₃.

Besonders bevorzugt besteht die Komponente A zu wenigstens 80 Gew.-%, bevorzugt zu wenigstens 90 Gew.-%, wobei die Gew.-%-Angaben auf die Komponente A bezogen sind, aus einem oder mehreren der Oxide ausgewählt aus der Gruppe bestehend aus Al₂O₃ und MgO.

Die Komponente A kann bis zu 20 Gew.-%, bevorzugt bis zu 10 Gew.-% sonstige Komponenten enthalten, wobei die Gew.-%-Angaben auf die Komponente A bezogen sind. Unter sonstige Komponenten werden insbesondere nicht die Hauptbestandteile der Komponenten B, C und D verstanden, welche weiter unten beschrieben werden. Beispielsweise können sonstige Komponenten andere Metalloxide als die unter Komponente A beschriebenen Metalloxide oder Alkali- oder Erdalkalimetalloxide sein. SiO₂ ist bevorzugt nur bis zu 8 Gew.-%, besonders bevorzugt bis zu 5 Gew.-% in der Komponente A zugegen, wobei die Gew.-%-Angaben auf die Komponente A bezogen sind.

Das eine Oxid oder die mehreren Oxide der Komponente A können in beliebigen Teilchengrößen eingesetzt werden. Beispielsweise können das eine Oxid oder die mehreren Oxide der Komponente A mit einer Teilchengröße von 1 bis 6 mm vorliegen oder mit einer Teilchengröße von unter 1 mm. Bevorzugt wird eine Mischung von einem oder mehreren Oxiden der Komponente A mit einer Teilchengröße von 1 bis 6 mm, bevorzugt von 1 bis 4 mm, und von einem oder mehreren Oxiden der Komponente A mit einer Teilchengröße von unter 1 mm, bevorzugt von unter 0.5 mm, als Komponente A eingesetzt.

Besonders bevorzugt enthält die Komponente A eine Mischung A bestehend aus 40 bis 80 Gew.-%, bevorzugt 50 bis 70 Gew.-%, wobei die Gew.-% auf die Mischung A bezogen sind, von einem oder mehreren Oxiden der Komponente A mit einer Teilchengröße von 1 bis 6 mm, bevorzugt von 1 bis 4 mm, und 20 bis 60 Gew.-%, bevorzugt 30 bis 50 Gew.-%, wobei die Gew.-% auf die Mischung A bezogen sind, von einem oder mehreren Oxiden der Komponente A mit einer Teilchengröße von unter 1 mm, bevorzugt von unter 0.5 mm.

### Al₂O₃

In einer bevorzugten Ausführungsform der vorliegenden Erfindung besteht die Komponente A zu wenigstens 80 Gew.-%, bevorzugt zu wenigstens 90 Gew.-%, wobei die Gew.-%-Angaben auf die Komponente A bezogen sind, aus Al₂O₃.

Bevorzugte erfindungsgemäße feuerfeste Materialien werden erhalten durch Erhitzen einer Mischung Z enthaltend Komponente A, die zu wenigstens 80 Gew.-%, bevorzugt zu wenigstens 90 Gew.-%, wobei die Gew.-%-Angaben auf die Komponente A bezogen sind, aus Al₂O₃ besteht, auf bevorzugt wenigstens 800 °C, besonders bevorzugt auf wenigstens 1200 °C, ganz besonders bevorzugt auf wenigstens 1450 °C.

Besonders bevorzugt wird eine Mischung A bestehend aus 40 bis 80 Gew.-%, bevorzugt 50 bis 70 Gew.-%, wobei die Gew.-% auf die Mischung A bezogen sind, Al₂O₃ mit einer Teilchengröße von 1 bis 6 mm, bevorzugt von 1 bis 4 mm, und 20 bis 60 Gew.-%, bevorzugt 30 bis 50 Gew.-%, wobei die Gew.-% auf die Mischung A bezogen sind, Al₂O₃ mit einer Teilchengröße von unter 1 mm, bevorzugt von unter 0.5 mm, als Komponente A eingesetzt.

Die so erhaltenen erfindungsgemäßen feuerfesten Materialien besitzen eine hervorragende chemische Beständigkeit. Bei Raumtemperatur sind sie durch Säuren und Laugen nahezu unangreifbar. Diese Eigenschaft bleibt auch im Hochtemperaturbereich bei Kontakt mit korrosiven Schmelzen erhalten.

### MgO

In einer weiteren bevorzugten Ausführungsform der vorliegenden Erfindung besteht die Komponente A zu wenigstens 80 Gew.-%, bevorzugt zu wenigstens 90 Gew.-%, wobei die Gew.-%-Angaben auf die Komponente A bezogen sind, aus MgO.

Bevorzugte erfindungsgemäße feuerfeste Materialien werden erhalten durch Erhitzen einer Mischung Z enthaltend Komponente A, die zu wenigstens 80 Gew.-%, bevorzugt zu wenigstens 90 Gew.-%, wobei die Gew.-%-Angaben auf die Komponente A bezogen sind, aus MgO besteht, auf wenigstens 800 °C, besonders bevorzugt auf wenigstens 1200 °C, ganz besonders bevorzugt auf wenigstens 1450 °C.

Die erfindungsgemäß einzusetzende Mischung Z enthält bevorzugt Komponente A, die zu wenigstens 80 Gew.-%, bevorzugt zu wenigstens 90 Gew.-%, wobei die Gew.-%-Angaben auf die Komponente A bezogen sind, aus MgO besteht, und bevorzugt Komponente C und/ oder Komponente D, die weiter unten näher beschrieben werden.

Besonders bevorzugt wird eine Mischung A bestehend aus 40 bis 80 Gew.-%, bevorzugt 50 bis 70 Gew.-%, wobei die Gew.-% auf die Mischung A bezogen sind, MgO mit einer Teilchengröße von 1 bis 6 mm, bevorzugt von 1 bis 4 mm, und 20 bis 60 Gew.-%, bevorzugt 30 bis 50 Gew.-%, wobei die Gew.-% auf die Mischung A bezogen sind, MgO mit einer Teilchengröße von unter 1 mm, bevorzugt von unter 0.5 mm, als Komponente A eingesetzt.

### Komponente B

Die erfindungsgemäßen feuerfesten Materialien werden erhalten durch Erhitzen der erfindungsgemäß einzusetzenden Mischung Z, die folgende Komponente B enthält:
- 2 bis 30 Gew.-%, bevorzugt 3 bis 15 Gew.-% einer Komponente B, wobei die Gew.-%-Angaben auf die Gesamtmasse der Komponenten A, B und, sofern vorhanden, C in der Mischung Z bezogen sind, und die Komponente B zu wenigstens 80 Gew.-%, bevorzugt zu wenigstens 85 Gew.-%, besonders bevorzugt zu wenigstens 90 Gew.-%, wobei die Gew.-%-Angaben auf die Komponente B bezogen sind, einen Mischkristall mit Spinell-Struktur enthält, der wenigstens die Oxide Fe₂O₃, Al₂O₃, MgO und Cr₂O₃ enthält.

Unter "Mischkristall mit Spinell-Struktur" wird im Sinne dieser Erfindung ein Oxid mit sich dreidimensional wiederholender Anordnung der Oxidionen verstanden, bei dem die Oxidionen eine kubisch-dichteste Packung bilden (Spinell-Anordnung) und die Metallkationen geordnet oder ungeordnet einen Teil der Oktaederlücken und Tetraederlücken besetzen. In dem Mischkristall mit Spinell-Struktur besetzen die Metallkationen bevorzugt ungeordnet einen Teil der Oktaederlücken und Tetraederlücken. Da der Mischkristall mit Spinell-Struktur ein einheitlicher homogener Festkörper ist, kann bei einer ungeordneten Besetzung eines Teils der Oktaederlücken und Tetraederlücken der Mischkristall mit Spinell-Struktur auch als feste Lösung angesehen werden.

In dem Mischkristall mit Spinell-Struktur der vorliegenden Erfindung bilden wenigstens die Oxide Fe₂O₃, Al₂O₃, MgO und Cr₂O₃ die oben beschriebene Struktur des Mischkristalls mit Spinell-Struktur aus. Die wenigstens in dem Mischkristall mit Spinell-Struktur vorliegenden Metallkationen sind Fe(II), Fe(III), Al(III), Mg(II) und Cr(III).

Bevorzugt enthält der Mischkristall mit Spinell-Struktur der Komponente B
- 30 bis 80 Gew.-%, besonders bevorzugt 40 bis 68 Gew.-%, Fe₂O₃,
- 10 bis 60 Gew.-%, besonders bevorzugt 15 bis 43 Gew.-%, Al₂O₃,
- 5 bis 55 Gew.-%, besonders bevorzugt 10 bis 38 Gew.-%, MgO und
- 5 bis 55 Gew.-%, besonders bevorzugt 7 bis 35 Gew.-%, Cr₂O₃,
wobei die Gew.-% bezogen sind auf die Masse des Mischkristalls mit Spinell-Struktur.

Neben dem Mischkristall mit Spinell-Struktur kann Komponente B noch bis zu 20 Gew.-%, bevorzugt bis zu 15 Gew.-%, besonders bevorzugt bis zu 10 Gew.-% sonstige Komponenten enthalten. Unter sonstige Komponenten werden insbesondere nicht die Hauptbestandteile der Komponenten A, C und D verstanden. Beispiele für solche sonstigen Komponenten sind CaO, TiO₂ und SiO₂, wobei SiO₂ bevorzugt nur bis zu 8 Gew.-%, besonders bevorzugt bis zu 5 Gew.-%, in der Komponente B zugegen ist, wobei die Gew.-%-Angaben auf die Komponente B bezogen sind.

Der Mischkristall mit Spinell-Struktur kann auch anhand seines kubischen Gitterparameters charakterisiert werden. Der Mischkristall mit Spinell-Struktur weist bevorzugt einen Gitterparameter von 822 pm bis 835 pm auf. Die Bezeichnung Gitterparameter (englisch lattice parameter) wird im Sinne dieser Erfindung als Synonym für Gitterkonstante benutzt.

### Herstellung von Komponente B

Als Komponente B können Chromerzrückstände, die beim oxidativen alkalischen Aufschluss von Chromerzen anfallen, eingesetzt werden. Diese enthalten in der Regel noch Reste von sechswertigem Chrom. Grundsätzlich ist es nicht erfindungswesentlich, ob die Komponente B sechswertiges Chrom enthält oder nicht. Aus diesem Grunde können die beim oxidativen alkalischen Aufschluss von Chromerzen anfallenden Chromerzrückstände direkt als Komponente B der erfindungsgemäß einzusetzenden Mischung Z eingesetzt werden.

Bevorzugt wird jedoch eine Komponente B mit einem Cr(VI)-Gehalt von weniger als 640 ppb Cr(VI), besonders bevorzugt mit einem Cr(VI)-Gehalt von weniger als 107 ppb Cr(VI), in der erfindungsgemäß einzusetzenden Mischung Z eingesetzt.

In einer bevorzugten Ausführungsform wird Komponente B der vorliegenden Erfindung nach einem Reduktionsverfahren enthalten. Besonders bevorzugt wird Komponente B der vorliegenden Erfindung nach einem Reduktionverfahren erhalten, enthaltend die Schritte
i) Mischen eines oxidischen Feststoffes, enthaltend die Oxide Fe₂O₃, Al₂O₃, MgO und Cr₂O₃ und enthaltend Cr(VI), bevorzugt bis zu 80000 ppm Cr(VI), besonders bevorzugt bis zu 50000 ppm Cr(VI), mit einer kohlenstoffhaltigen, im Bereich von 20 bis 100 °C flüssigen Verbindung,
ii) Behandeln der nach i) erhaltenen Mischung unter Schutzatmosphäre in einem indirekt beheizten Reaktor bei einer Temperatur von 700 °C bis 1100 °C, besonders bevorzugt bei einer Temperatur von 800 °C bis 1000 °C,
iii) Abkühlen des nach ii) erhaltenen Reaktionsproduktes unter Schutzatmosphäre auf wenigstens 300 °C, vorzugsweise auf wenigstens 150 °C.

Bevorzugt ist der oxidische Feststoff aus Schritt i) ein Chromerzrückstand, bevorzugt ein Chromerzrückstand angefallen beim Aufschluss von Chromerzen, beispielsweise von Chromit (Chromeisenstein) mit Natriumcarbonat für die Herstellung von Natriummonochromat als Ausgangsmaterial zur Gewinnung weiterer Chromchemikalien.

Bei dem Herstellungsverfahren von Natriummonochromat als Ausgangsmaterial für die Gewinnung weiterer Chromchemikalien kann ein Teil des Natriumcarbonats, das für den oxidativen alkalischen Aufschluss nötig ist, durch Calciumcarbonat CaCO₃ oder Dolomit (CaMg(CO₃)₂) oder Calciumoxid CaO (lime) ersetzt werden. Solche Verfahren bezeichnet man - je nach Anteil an zugesetztem Calciumoxid - als High Lime-, No Lime- oder Low Lime-Verfahren.

Der Chromerzrückstand kann, je nachdem ob er für den oxidativen alkalischen Aufschluss von Chromerz das High Lime-, No Lime- oder Low Lime-Verfahren, verwendet wurde, in seiner Zusammensetzung, insbesondere dem CaO-Gehalt, schwanken. Chromerzrückstände aus dem High Lime-Verfahren weisen bis zu 35 Gew.-% CaO auf, solche aus dem No Lime-Verfahren gewöhnlich weniger als 5 Gew.-% CaO, während die aus dem Low Lime-Verfahren von 5 bis 35 Gew.-% CaO liegen.

Bevorzugt beträgt der CaO-Gehalt des oxidischen Feststoffs aus Schritt i) weniger als 10 Gew.-% CaO, besonders bevorzugt weniger als 5 Gew.-% CaO.

Bevorzugt werden in Schritt i) oxidische Feststoffe eingesetzt, bei denen mindestens 90 % der Partikel kleiner als 500 µm, besonders bevorzugt kleiner als 300 µm sind. Dies kann - falls erforderlich - durch eine dem Schritt i) vorgeschaltete Siebung und/oder Mahlung erreicht werden.

Bevorzugt wird als kohlenstoffhaltige Verbindung in Schritt i) eine Polyhydroxyverbindung, besonders bevorzugt Glycerin oder ein flüssiges Polyethylenglykol, ganz besonders bevorzugt Polyethylenglykol mit einer Molmasse von bis zu 600, eingesetzt.

Die thermische Reduktion im Schritt ii) kann in einem kontinuierlich arbeitenden oder diskontinuierlich arbeitenden indirekt beheizten Reaktor erfolgen, wobei kontinuierlich arbeitende indirekt beheizte Reaktoren besonders bevorzugt sind. Ein Beispiel dafür sind gas- oder elektrisch indirekt beheizte Drehrohröfen.

Das nach dem Schritt iii) erhaltene abgekühlte Reaktionsprodukt kann gegebenenfalls noch einer Siebung und/oder Mahlung unterzogen werden.

Das nach dem Schritt iii) erhaltene abgekühlte Reaktionsprodukt kann nach dem in WO 2014006196 A1 beschriebenen alkalischen Aufschlussverfahren I aufgearbeitet und der Cr(VI)-Gehalt im alkalischen Extrakt mittels UV/Vis-Spektroskopie bestimmt werden. Das nach dem Schritt iii) erhaltene abgekühlte Reaktionsprodukt kann auch gemäß dem in WO 2014006196 A1 beschriebenen modifizierten alkalischen Aufschlussverfahren II aufgearbeitet werden.

Bevorzugt beträgt der Cr(VI)-Gehalt der Komponente B, hergestellt nach dem oben beschriebenen Reduktionsverfahren, weniger als 640 ppb Cr(VI), besonders bevorzugt von weniger als 107 ppb Cr(VI).

Der Mischkristall mit Spinell-Struktur der Komponente B kann auch aus den entsprechenden Hydroxiden beziehungsweise Oxyhydraten, beispielsweise FeOOH, AIOOH, CrOOH, Mg(OH)₂, erhalten werden. Aus diesen Hydroxiden beziehungsweise Oxyhydraten muss jedoch zunächst die einheitliche homogene Phase des Mischkristalls mit Spinell-Struktur hergestellt werden. Eine solche einheitliche homogene Phase des Mischkristalls mit Spinell-Struktur kann aus den entsprechenden Hydroxiden beispielsweise durch eine Festkörperreaktion, beispielsweise durch Zusammenmischen der Hydroxide, gegebenenfalls Pressen, Erhitzen und gegebenenfalls Glühen der Hydroxidmischung erhalten werden.

### Komponente C

Bevorzugte erfindungsgemäße feuerfeste Materialien werden erhalten durch Erhitzen der erfindungsgemäß einzusetzenden Mischung Z, die neben Komponente A und Komponente B noch folgende Komponente C enthält:
- 0.5 bis 25 Gew.-%, bevorzugt 1 bis 15 Gew.-% einer Komponente C, wobei die Gew.-%-Angaben auf die Gesamtmasse der Komponenten A, B und C in der Mischung Z bezogen sind, die zu wenigstens 86 Gew.-%, bevorzugt zu wenigstens 92 Gew.-%, wobei die Gew.-%-Angaben auf die Komponente C bezogen sind, Kohlenstoff enthält.

Als Komponente C wird bevorzugt Graphit oder Ruß oder Mischungen davon eingesetzt. Bevorzugt wird Graphit als Komponente C eingesetzt.

Als Ruß der Komponente C werden bevorzugt Thermal- und Furnace-Ruße auf Erdgas- und/ oder -ölbasis eingesetzt.

Bevorzugte erfindungsgemäße feuerfeste Materialien werden dadurch erhalten, dass das Erhitzen einer Mischung Z enthaltend Komponente A und Komponente B und Komponente C unter Luftausschluss durchgeführt wird.

In einer bevorzugten Ausführungsform enthält die erfindungsgemäß einzusetzende Mischung Z 80 bis 97 Gew.-% der Komponente A, wobei die Gew.-%-Angaben auf die Gesamtmasse der Komponenten A, B und C in der Mischung Z bezogen sind, wobei Komponente A zu wenigstens 80 Gew.-%, bevorzugt zu wenigstens 90 Gew.-%, wobei die Gew.-%-Angaben auf die Komponente A bezogen sind, aus MgO besteht, und 3 bis 15 Gew.-% der Komponente B, wobei die Gew.-%-Angaben auf die Gesamtmasse der Komponenten A, B und C in der Mischung Z bezogen sind, und 0.5 bis 25 Gew.-%, bevorzugt 1 bis 15 Gew.-%, wobei die Gew.-%-Angaben auf die Gesamtmasse der Komponenten A, B und C in der Mischung Z bezogen sind, der Komponente C.

Eine solche bevorzugte erfindungsgemäß einzusetzende Mischung Z wird bevorzugt unter Luftausschluss erhitzt, wobei das Erhitzen bevorzugt auf wenigstens 350 °C erfolgt. Weitere bevorzugte erfindungsgemäße feuerfeste Materialien werden erhalten durch Erhitzen einer Mischung Z enthaltend Komponente A, die zu wenigstens 80 Gew.-%, bevorzugt zu wenigstens 90 Gew.-%, wobei die Gew.-%-Angaben auf die Komponente A bezogen sind, aus MgO besteht, und enthaltend Komponente B und Komponente C, auf wenigstens 800 °C, bevorzugt auf wenigstens 1200 °C, besonders bevorzugt auf wenigstens 1450 °C.

In Komponente C können noch bis zu 14 Gew.-%, bevorzugt bis zu 8 Gew.-%, sonstige Komponenten enthalten sein. Unter sonstige Komponenten werden insbesondere nicht die Hauptbestandteile der Komponenten A, B und D verstanden. Beispiele für solche sonstigen Komponenten sind ölige Komponenten, Pyrolyseprodukte und polyzyklische Aromaten.

Die Bedeutung der Komponente C liegt in der Verschleißverminderung durch Verringern der Infiltrationstiefe sowie in der Bindung der bevorzugten feuerfesten Materialien. Des Weiteren führt die Komponente C zu einer Verbesserung der Temperaturwechselbeständigkeit durch Erhöhung der Wärmeleitfähigkeit und Erniedrigung der Wärmedehnung der bevorzugten feuerfesten Materialien.

### Weitere Komponenten

In einer bevorzugten erfindungsgemäß einzusetzenden Mischung Z beträgt die Gesamtmasse der Komponenten A, B und, sofern vorhanden, C wenigstens 50 Gew.-%, bevorzugt wenigstens 65 Gew.-%, besonders bevorzugt wenigstens 75 Gew.-% der Gesamtmasse der Mischung Z.

In der erfindungsgemäß einzusetzenden Mischung Z können noch weitere Komponenten wie beispielsweise Wasser zugegen sein.

Sofern Wasser in der erfindungsgemäß einzusetzenden Mischung Z enthalten ist, ist dieses Wasser bevorzugt bis 20 Gew.-%, besonders bevorzugt bis 10 Gew.-%, ganz besonders bevorzugt bis 5 Gew.-%, wobei die Gew.-%-Angaben auf die Gesamtmasse der Mischung Z bezogen sind, enthalten.

### Komponente D

Bevorzugte erfindungsgemäße feuerfeste Materialien werden erhalten durch Erhitzen der erfindungsgemäß einzusetzenden Mischung Z, die neben Komponente A und Komponente B und gegebenenfalls Komponente C als weitere Komponente die Komponente D enthält, wobei Komponente D ein oder mehrere Bindemittel ist.

Die erfindungsgemäß einzusetzende Mischung Z kann bis zu 25 Gew.-%, bevorzugt bis zu 10 Gew.-%, wobei die Gew.-%-Angaben auf die Gesamtmasse der Mischung Z bezogen sind, der Komponente D enthalten.

Bevorzugt wird ein oder mehrere Bindemittel der Komponente D ausgewählt aus der Gruppe der Tone, Tonerdezemente, der anorganischen Phosphate, Alkalisilikate, Ethylsilikate, anorganischen Sulfate, Boroxide, verkokende Bindemittel, bevorzugt Pech oder Kunstharze oder Mischungen davon, Stärke und Ligninsulfonate.

Als verkokende Bindemittel der Komponente D werden bevorzugt Pech oder Kunstharz oder Mischungen davon verwendet.

Pech ist ein schmelzbares Gemisch aus polyzyklischen aromatischen Kohlenwasserstoffen, die durch fraktionierte Destillation von Rohteer, der bei der Verkokung von Steinkohle anfällt, gewonnen wird.

Als Kunstharze der Komponente D können Phenolharze (synthetische Polykondensationsprodukte aus Phenol und Formaldehyd) verwendet werden. Es können flüssige Phenolharze, feste Phenolharze oder Mischungen davon verwendet werden. Bevorzugt wird eine Mischung aus flüssigen und festen Phenolharzen als Komponente D verwendet. Besonders bevorzugt wird eine Mischung aus einem flüssigen Phenolharz und einem festen Phenolharz im Verhältnis 1.1 : 1 bis 3 : 1, bevorzugt 1.5 : 1 bis 2.5 : 1, Gew.- % : Gew.%, verwendet. Die Pyrolyse der Kunstharze erfolgt im Gegensatz zu Pech im festen Zustand. Die verkokenden Bindemittel bringen zudem Kohlenstoff in die Mischung Z mit ein.

Der Kohlenstoff, der in einer erfindungsgemäß einzusetzenden Mischung Z enthalten ist, kann dabei nicht nur durch Komponente C in die Mischung Z eingebracht werden, sondern auch durch Komponente D, beispielsweise durch verkokende Bindemittel der Komponente D.

Bevorzugt enthält die erfindungsgemäß einzusetzende Mischung Z Komponente A, die zu wenigstens 80 Gew.-%, bevorzugt zu wenigstens 90 Gew.-%, wobei die Gew.-%-Angaben auf die Komponente A bezogen sind, aus MgO besteht, und Graphit als Komponente C und Phenolharz als Komponente D.

### Herstellung der erfindungsgemäß einzusetzenden Mischung Z

Um eine erfindungsgemäß einzusetzende Mischung Z im Sinne der vorliegenden Erfindung zu erhalten, können übliche Vorstufen wie Aufbereitung und Formgebung zum Erhalt dieser Mischung Z aus den Komponenten A und B und gegebenenfalls weiteren Komponenten wie Komponente C und/ oder Komponente D durchlaufen werden.

Die Aufbereitung kann beispielsweise aus der Zerkleinerung der Rohstoffe durch Brechen oder Mahlen, dem Fraktionieren des Brechgutes durch Sieben oder Sichten und dem Herstellen des formbaren Gemenges nach vorgegebenem Rohstoff- und Körnungskonzept durch homogenes Mischen zumeist mit Wasser und gegebenenfalls einem Bindemittel der Komponente D bestehen.

Die gegebenenfalls aufbereiteten Rohstoffe der Komponenten A und B und gegebenenfalls weiterer Komponenten wie Komponente C und/ oder Komponente D können vor dem Erhitzen in eine bestimmte Form gebracht werden.

Die Wahl des Formgebungsverfahrens richtet sich nach der Verformbarkeit des Gemenges, abhängig von Wassergehalt und Plastizität, den gewünschten Eigenschaften des Fertigerzeugnisses, aber auch nach der Stückzahl und der Komplexizität der Form des Erzeugnisses. Beispiele für Formgebungsverfahren sind Strang- beziehungsweise Extrusionsverfahren plastischer Gemenge, hydraulisches Pressen und Schlagpressen von Gemengen mit 2 bis 6% Feuchte mit Pressdrücken von normalerweise 40 bis 120 N/mm², manuelles oder mechanisches Stampfen beziehungsweise Rammen für komplexe Formen oder kleinere Anzahl zu fertigender Teile, isostatisches Pressen für meist feinkörnige hochwertige Produkte mit Pressdrücken von wenigstens 300 N/mm² sowie Schlickergießen für zumeist feinkörnige Komponenten und spezielle Teile, auch für größere Blöcke.

Die erfindungsgemäß einzusetzende Mischung Z kann im Sinne der vorliegenden Erfindung auch ein Formkörper sein, sofern sie durch Formgebungsverfahren, bevorzugt durch eines der zuvor beschriebenen Formgebungsverfahren, in eine Form gebracht wurde.

Die Formkörper, die nach einem Pressverfahren als Formgebungsverfahren erhalten werden, werden im Sinne der vorliegenden Erfindung als Presslinge verstanden.

Bevorzugte erfindungsgemäße feuerfeste Materialien werden erhalten durch Erhitzen der erfindungsgemäß einzusetzenden Mischung Z, wobei die Mischung Z als Formkörper eingesetzt wird.

Bevorzugte erfindungsgemäße feuerfeste Materialien werden erhalten durch Erhitzen der erfindungsgemäß einzusetzenden Mischung Z, wobei die Mischung Z als Pressling eingesetzt wird.

Die erfindungsgemäß einzusetzende Mischung Z, bevorzugt Formkörper, besonders bevorzugt Pressling, wird bevorzugt vor dem Erhitzen getrocknet, bevorzugt auf wenigstens 150 °C, um Trockenrisse oder Fehler nach dem Erhitzen zu vermeiden. Die Trockenzeit kann - je nach Größe und Trocknungsverhalten des Formkörpers - mehrere Tage bis zu Wochen betragen.

### Herstellung der erfindungsgemäßen feuerfesten Materialien

Unter "Erhitzen" wird im Rahmen dieser Erfindung die thermische Behandlung der Mischung Z verstanden. Das Erhitzen kann - abhängig von der gewählten Temperatur und der Menge der zu erhitzenden Mischung Z beziehungsweise der Stückzahl und Größe der als Mischung Z eingesetzten Formkörper - in kontinuierlich arbeitenden Kanalöfen beziehungsweise Tunnelöfen oder auch in diskontinuierlich arbeitenden Kammeröfen erfolgen. Derartige Öfen sind in der Regel öl- oder gasbeheizt.

Das Erhitzen wird in der Regel an Luft durchgeführt. Wenn die erfindungsgemäß einzusetzende Mischung Z oxidationsempfindliche Bestandteile, wie beispielsweise Komponente C und/ oder Bindemittel der Komponente D, bevorzugt verkokende Bindemittel der Komponente D, enthält, wird das Erhitzen bevorzugt unter Luftausschluss durchgeführt.

Bevorzugt erfolgt das Erhitzen der erfindungsgemäß einzusetzenden Mischung Z auf wenigstens 800 °C, besonders bevorzugt auf wenigstens 1200 °C, ganz besonders bevorzugt auf wenigstens 1450 °C.

Die Dauer des Erhitzens beträgt im Rahmen der vorliegenden Erfindung bevorzugt mehrere Stunden, besonders bevorzugt 1 bis 4 Stunden.

### Nachbehandlung

Die erfindungsgemäßen feuerfesten Materialien können nach ihrem Erhalt noch nachbehandelt werden.

Der Gehalt an Kohlenstoff in den erfindungsgemäßen feuerfesten Materialien kann erhöht werden, indem zunächst erfindungsgemäße feuerfeste Materialien erhalten werden und diese, bevorzugt nach einer Trocknung, erneut mit Komponente C und/ oder verkokenden Bindemitteln der Komponente D gemischt und auf wenigstens 250 °C, bevorzugt auf wenigstens 350 °C, erhitzt werden.

Die Erfindung betrifft demnach bevorzugte feuerfeste Materialien, erhalten durch Erhitzen der erfindungsgemäß einzusetzenden Mischung Z und anschließendem Mischen der erhaltenen feuerfesten Materialien mit Komponente C und/ oder verkokenden Bindemitteln der Komponente D und Erhitzen dieser Mischung auf wenigstens 250 °C, bevorzugt auf wenigstens 350 °C.

Durch das Mischen der erhaltenen feuerfesten Materialien mit Komponente C und/ oder verkokenden Bindemitteln der Komponente D, bevorzugt mit Pech als Komponente D, und Erhitzen dieser Mischung auf wenigstens 250 °C, bevorzugt auf wenigstens 350 °C, wird durch Vernetzung ein hochmolekulares und unschmelzbares Resitgitter um die feuerfesten Materialien gebildet.

Auch das Mischen, bevorzugt Tränken, von erfindungsgemäßen feuerfesten Materialien mit Pech der Komponente D unter Vakuum bei Temperaturen von 150 bis 200 °C sei an dieser Stelle als Nachbehandlung erwähnt.

Die Erfindung betrifft demnach bevorzugte feuerfeste Materialien, erhalten durch Erhitzen der erfindungsgemäß einzusetzenden Mischung Z und anschließendem Mischen der erhaltenen feuerfesten Materialien mit Pech der Komponente D und Erhitzen dieser Mischung auf 150 bis 200 °C unter Vakuum.

Außerdem kann die Nachbehandlung der erfindungsgemäßen feuerfesten Materialien auch in einem Schneiden und/ oder Schleifen der erfindungsgemäßen feuerfesten Materialien bestehen. Diese Nachbehandlung kann beispielsweise bei mörtelfreier, das heißt fugenfreier, Verlegung der erfindungsgemäßen feuerfesten Materialien als Steine oder Blöcke erforderlich sein, sofern die Maßgenauigkeit der erfindungsgemäßen feuerfesten Materialien nicht ausreicht. Für die Auskleidung von Anlagen wird häufig die zuvor beschriebene Ausmauerung, bei der die zuvor in Form gegebenen feuerfesten Materialien eingesetzt werden, verwendet.

Die Erfindung betrifft demnach bevorzugte feuerfeste Materialien, erhalten durch Erhitzen der erfindungsgemäß einzusetzenden Mischung Z und anschließendem Schneiden und/ oder Schleifen der erhaltenen feuerfesten Materialien.

Bevorzugte erfindungsgemäße feuerfeste Materialien, erhalten durch Erhitzen einer Mischung Z enthaltend Komponente A, die zu wenigstens 80 Gew.-%, bevorzugt zu wenigstens 90 Gew.-%, wobei die Gew.-%-Angaben auf die Komponente A bezogen sind, aus MgO besteht, und enthaltend Komponente C, können bei einer Temperatur von wenigstens 150 °C getrocknet beziehungsweise wärmebehandelt (getempert) werden, um die Festigkeit durch zusätzliche chemische Reaktionen zu erhöhen und/ oder leichtflüchtige Bestandteile oder Hydratwasser auszutreiben.

Die Erfindung betrifft demnach bevorzugte feuerfeste Materialien, erhalten durch Erhitzen der erfindungsgemäß einzusetzenden Mischung Z, enthaltend Komponente A, die zu wenigstens 80 Gew.-%, bevorzugt zu wenigstens 90 Gew.-%, wobei die Gew.-%-Angaben auf die Komponente A bezogen sind, aus MgO besteht, und enthaltend Komponente C, und anschließendem Erhitzen der erhaltenen feuerfesten Materialien bei wenigstens 150 °C.

Des Weiteren können ein oder mehrere Bindemittel der Komponente D den erfindungsgemäßen feuerfesten Materialien auch in einer Nachbehandlung zugefügt werden, um deren Handhabung in dem jeweiligen Anwendungsgebiet, beispielsweise bei der Auskleidung von Anlagen, zu erleichtern.

### Verwendung

Die Erfindung betrifft weiterhin die Verwendung der erfindungsgemäßen feuerfesten Materialien als Auskleidung von Anlagen für thermische Prozesse (Schmelz-, Brenn- und Wärmebehandlungsanlagen) sowie als Auskleidung von Transportgefäßen, für den Bau von Konstruktionselementen wie verschleißfesten, technischen und/ oder mechanischen Bauteilen, für die Wärmerückgewinnung und für die Wärmedämmung.

Bevorzugt werden für die zuvor beschriebene Verwendung erfindungsgemäße feuerfeste Materialien eingesetzt, die aus der erfindungsgemäß einzusetzenden Mischung Z erhalten wurden, wobei die erfindungsgemäß einzusetzende Mischung Z als Formkörper eingesetzt wurde.

Die erfindungsgemäßen feuerfesten Materialien, erhalten durch Erhitzen einer erfindungsgemäß einzusetzenden Mischung Z, enthaltend Komponente A, die zu wenigstens 80 Gew.-%, bevorzugt zu wenigstens 90 Gew.-%, wobei die Gew.-%-Angaben auf die Komponente A bezogen sind, aus MgO besteht, und enthaltend Komponente C, werden bevorzugt in der Stahlindustrie, besonders als Verschleißfutter in Sauerstoffblaskonvertern, aber auch in Elektrolichtbogenöfen sowie in Stahlgieß- und Nachbehandlungspfannen und Konstruktionselementen verwendet. Bevorzugt werden sie dort, wo eine hohe Heißerosionsfestigkeit verlangt wird, verwendet. Beispiele für solche Anwendungsgebiete sind die Schrottaufschlag- und Zapfenbereiche sowie die Mündung von Konvertern.

Die erfindungsgemäßen feuerfesten Materialien sind unabhängig von ihrem späteren Einsatz, d.h. beispielsweise davon, ob sie bei gleichzeitiger mechanischer und korrosiver Belastung bei Dauertemperaturen von über 1300 °C industriell eingesetzt werden, bei tieferen Temperaturen oder bei Raumtemperatur. Zahlreiche Konstruktionselemente wie verschleißfeste, technische und/ oder mechanische Bauteile, die aus feuerfesten Materialien hergestellt werden, können auch bei deutlich tieferen Temperaturen oder sogar bei Raumtemperatur eingesetzt werden.

### Beispiele

Anhand der nachfolgenden Beispiele wird die Erfindung näher erläutert, ohne dass dadurch eine Einschränkung der Erfindung bewirkt werden soll.

### Allgemeine Durchführung

### 1. Herstellung der Komponente B

Als Ausgangsstoff für die Herstellung von Komponente B dient in den nachfolgenden erfindungsgemäßen Beispielen Chromerzrückstand, wie er aus dem industriellen Herstellungsprozess von Natriummonochromat ausgehend von Chromit (Chromeisenstein) über einen oxidativen alkalischen Aufschluss mit Natriumcarbonat (sogenanntes No Lime-Verfahren) anfällt.

Der im Produktionsprozess von Natriummonochromat nach Fest-Flüssig-Separation in Form eines feuchten Filterkuchens angefallene Chromerzrückstand wurde lediglich getrocknet, aber nicht gesiebt oder gemahlen. Die Zusammensetzung des getrockneten Chromerzrückstandes kann der nachfolgenden Tabelle 1 entnommen werden. Er wies einen Cr(VI)-Gehalt von 856 ppm auf.

Die Bestimmung des Cr(VI)-Gehaltes erfolgte gemäß dem in WO 2014006196 A1 offenbarten modifizierten alkalischen Aufschlussverfahren I in Kombination mit der dort ebenfalls offenbarten UV/Vis-spektroskopischen Methode zur Ermittlung des Chrom(VI)-Gehaltes.

**Tabelle 1**

| **Cr₂O₃** | **Fe₂O₃** | **MgO** | **CaO** | **SiO₂** | **Al₂O₃** | **TiO₂** | **Sonstiges** |
|---|---|---|---|---|---|---|---|
| 11.3 | 45.9 | 13.9 | 0.02 | 1.44 | 21.8 | 1.05 | ca. 4.6 |

Tabelle 1 zeigt die Zusammensetzung von COPR, welches als Ausgangsstoff für die Herstellung des reduzierten COPRs, welches in den erfindungsgemäßen Beispielen als Komponente B eingesetzt wurde, verwendet wurde. Alle Angaben in Gew.-% bezogen auf die Gesamtmasse des COPRs.

Der oben beschriebene getrocknete Chromerzrückstand wurde gemäß dem in WO 2014006196 A1 offenbarten Verfahren zur Reduktion von sechswertigem Chrom in oxidischen Feststoffen reduziert. Dazu wurde der getrocknete Chromerzrückstand mit einer kohlenstoffhaltigen, im Bereich von 20 bis 100 °C flüssigen Verbindung (1.5 Gew.-% Polyethylenglycol, PEG, mit einer Molmasse von 380 bis 420) gemischt, um benetzte Chromerzrückstands-Partikel zu erhalten. Diese Mischung wurde in einen elektrisch indirekt beheizten Drehrohrofen mit 22.5 kg/h eingetragen. Das Ofenrohr hatte eine Gesamtlänge von 1.5 m, wovon 1.1 m beheizt waren. Der Rohrdurchmesser betrug 0.3 m und der Ofen wurde mit 3 U/min bei 900 °C betrieben. Im Ofen herrschte eine Schutzatmosphäre aus Kohlendioxid. Das erhaltene Produkt wurde unter Kohlendioxid-Atmosphäre auf wenigstens 150 °C abgekühlt.

Nach Abkühlung wurde das schwarze reduzierte Chromerzrückstands-Reaktionsprodukt entnommen, über ein 300 µm-Sieb abgesiebt und ca. 10 g des Feinanteiles gemäß dem in WO 2014006196 A1 beschriebenen alkalischen Aufschlussverfahren I aufgearbeitet und der Cr(VI)-Gehalt im alkalischen Extrakt mittels UV/Vis-Spektroskopie bestimmt. Er lag unterhalb der Bestimmungsgrenze von 640 ppb. Der Cr(VI)-Gehalt lag selbst dann noch unter der Bestimmungsgrenze, wenn das reduzierte Chromerzrückstands-Reaktionsprodukt gemäß dem in WO 2014006196 A1 beschriebenen modifizierten alkalischen Aufschlussverfahren II aufgearbeitet wurde. Der Cr(VI)-Gehalt im reduzierten Chromerzrückstands-Reaktionsprodukt lag also bei unter 107 ppb Cr(VI). Der erhaltene reduzierte Chromerzrückstand enthielt also kein auf diese Weise nachweisbares Cr(VI) mehr.

Der Gitterparameter des reduzierten Chromerzrückstandes wurde an Pulverproben mittels Röntgendiffraktometrie bestimmt und lag in dem Bereich von 822 pm bis 835 pm.

Dieser Cr(VI)-freie Chromerzrückstand wurde als Komponente B zur Herstellung der erfindungsgemäßen feuerfesten Materialien in den nachfolgenden Beispielen eingesetzt.

### 2. Feuerfeste Materialien

### 2.1 Feuerieste Materialien mit Al₂O₃ in der Komponente A

Es wurden Mischungen 2 und 3, die erfindungsgemäß einzusetzenden Mischungen Z entsprechen, hergestellt mit Aluminiumoxid als Komponente A und Cr(VI)-freiem Chromerzrückstand als Komponente B, dessen Herstellung weiter oben beschrieben ist. Als Aluminiumoxid diente Sinterkorund T 60 der Firma Almatis GmbH, Deutschland. Das eingesetzte Aluminiumoxid lag als Mischung aus Aluminiumoxid mit einer Teilchengröße von 1 bis 3 mm, in Tabelle 2 als "Al₂O₃ grob" bezeichnet, und Aluminiumoxid mit einer Teilchengröße von kleiner als 0.5 mm, in Tabelle 2 als "Al₂O₃ fein" bezeichnet, vor. Als Referenz diente eine Mischung 1 aus "Al₂O₃ grob" und "Al₂O₃ fein" als Komponente A, wobei Mischung 1 keine Komponente B enthielt.

Die Mischungen 1 bis 3 wurden jeweils mit 4 Gew.-% Wasser, bezogen auf die Gesamtmasse der jeweiligen Mischung, angefeuchtet, jeweils homogen gemischt und unter einem Pressdruck von 100 MPa (=100 N/mm²) in Stahlformen zu zylinderförmigen Presslingen (Durchmesser=Höhe=36 mm) uniaxial verpresst. Nach dem Trocknen bei 110°C für 24 Stunden wurden die Presslinge bei 1600 °C und bei 1650 °C in Luftatmosphäre erhitzt. Danach erfolgte an den erhaltenen feuerfesten Materialien die Bestimmung der Kaltdruckfestigkeit (KDF) bzw. der Heißdruckfestigkeit bei 1450 °C (HDF₁₄₅₀) an ausgewählten feuerfesten Materialien.

Die Zusammensetzung der untersuchten Mischungen 1 bis 3 und die an den feuerfesten Materialien erzielten Ergebnisse sind in Tabelle 2 (Mischungen erhitzt auf 1600 °C) und Tabelle 3 (Mischungen erhitzt auf 1650 °C) angeführt.

**Tabelle 2**

| **Mischung** | **Komponente A** | | **Komponente B** | **KDF** (N/mm²) |
|---|---|---|---|---|
| | **Al₂O₃ grob** (Gew.-%) | **Al₂O₃ fein** (Gew.-%) | **reduziertes COPR** (Gew.-%) | |
| 1 | 55 | 45 | 0 | 22.6 |
| 2 (Z) | 55 | 40 | 5 | 46.4 |
| 3 (Z) | 55 | 35 | 10 | 48.4 |

**Tabelle 3**

| **Mischung** | **Komponente A** | | **Komponente B** | **KDF** (N/mm²) | **HDF₁₄₅₀** (N/mm²) |
|---|---|---|---|---|---|
| | **Al₂O₃ grob** (Gew.-%) | **Al₂O₃ fein** (Gew.-%) | **reduziertes COPR** (Gew.-%) | | |
| 1 | 55 | 45 | 0 | 17.0 | 0.7 |
| 2 (Z) | 55 | 40 | 5 | 33.0 | 3.8 |
| 3 (Z) | 55 | 35 | 10 | 28.3 | 2.0 |

Tabelle 2 zeigt die Zusammensetzungen der Mischungen 1 bis 3 mit 0 Gew.-%, 5 Gew.-% und 10 Gew.-% Cr(VI)-freiem Chromerzrückstand als Komponente B, wobei die Gew.-%-Angaben auf die Gesamtmasse der Komponenten A und B in der Mischung bezogen sind, und Eigenschaften der feuerfesten Materialien erhalten nach Erhitzen auf 1600 °C.

Tabelle 3 zeigt die Zusammensetzung der Mischungen 1 bis 3 mit 0 Gew.-%, 5 Gew.-% und 10 Gew.-% Cr(VI)-freiem Chromerzrückstand als Komponente B, wobei die Gew.-%-Angaben auf die Gesamtmasse der Komponenten A und B in der Mischung bezogen sind, und Eigenschaften der feuerfesten Materialien erhalten nach Erhitzen auf 1650 °C.

Die erfindungsgemäßen feuerfesten Materialien zeichnen sich durch eine hohe Kaltdruckfestigkeit sowie hohe Heißdruckfestigkeit aus.

### 2.2 Feuerieste Materialien mit MgO in der Komponente A

Es wurden Mischungen 5 und 6, die erfindungsgemäß einzusetzenden Mischungen Z entsprechen, hergestellt mit Magnesiumoxid als Komponente A und Cr(VI)-freiem Chromerzrückstand als Komponente B, dessen Herstellung weiter oben beschrieben ist, und feinkristallinem Graphit als Komponente C. Als Magnesiumoxid diente Sintermagnesia der Firma NEDMAG, Niederlande. Das eingesetzte Magnesiumoxid lag als Mischung aus Magnesiumoxid mit einer Teilchengröße von 1 bis 2 mm, in Tabelle 3 als "MgO grob" bezeichnet, und Magnesiumoxid mit einer Teilchengröße von kleiner als 0.1 mm, in Tabelle 3 als "MgO fein" bezeichnet, vor. Als Referenz diente eine Mischung 4 aus "MgO grob" und "MgO fein" als Komponente A und feinkristallinem Graphit als Komponente C, wobei Mischung 4 keine Komponente B enthielt.

Als Bindemittel der Komponente D diente eine Mischung aus 4 Gew.-% eines flüssigen Phenolharzes und 2 Gew.-% eines festen Phenolharzes, wobei die Gew.-%-Angaben auf die Gesamtmasse der Mischung bezogen sind. Die jeweils homogen gemischten Versätze wurden unter einem Pressdruck von 100 MPa (=100 N/mm²) in Stahlform zu zylinderförmigen Presslingen (Durchmesser=Höhe=36 mm) uniaxial verpresst. Die Presslinge wurden bei 400 °C unter Luftausschluss 2 Stunden lang getempert.

Die getemperten Presslinge wurden in einem Graphitbett bei 1500 °C 2 Stunden lang in Luft erhitzt. Dabei war eine Stirnseite der Presslinge der Ofenatmosphäre ausgesetzt.

Zur Auswertung der Oxidationsbeständigkeit wurde ein Pressling nach dem Erhitzen bei 1500 °C für 2 Stunden der Höhe nach halbiert. Die Schnittfläche wurde ausgewertet und die Fläche des sogenannten Schwarzkerns (SK) bestimmt. Der Schwarzkern ist der unausgebrannte Kohlenstoff. Seine Größe, bezogen auf die gesamte Schnittfläche in % ausgedrückt, dient als Maß für die Oxidationsbeständigkeit.

Die Zusammensetzung der untersuchten Mischungen und die erzielten Ergebnisse sind in Tabelle 4 angeführt. Dabei wurde neben der KDF auch die offene Porosität (OP) sowie die Rohdichte (RD) bestimmt.

**Tabelle 4**

| **Mischung** | **Komponente A** | | **Komponente B** | **Komponente C** | **Komponente D** | **KDF** (N/ mm²) | **OP** (%) | **RD** (g/ cm³) | **SK** (%) |
|---|---|---|---|---|---|---|---|---|---|
| | **MgO grob** (Gew .-%) | **MgO fein** (Gew .-%) | **reduziertes COPR** (Gew.-%) | **Graphit** (Gew.- %) | **Phenolharz** (Gew.-%) | | | | |
| 4 | 50 | 45 | 0 | 5 | 6 | 5.2 | 33.6 | 2.25 | 76.6 |
| 5 (Z) | 50 | 40 | 5 | 5 | 6 | 6.0 | 31.4 | 2.36 | 85.4 |
| 6 (Z) | 50 | 35 | 10 | 5 | 6 | 6.8 | 30.9 | 2.41 | 80.2 |

Tabelle 4 zeigt die Zusammensetzung der Mischungen 4 bis 6 mit 0 Gew.-%, 5 Gew.-% und 10 Gew.-% Cr(VI)-freiem Chromerzrückstand als Komponente B, wobei die Gew.-%-Angaben auf die Gesamtmasse der Komponenten A, B und C in der Mischung bezogen sind und die Gew.-%-Angabe von Komponente D auf die Gesamtmasse der jeweiligen Mischung bezogen ist, und die Eigenschaften der feuerfesten Materialien erhalten nach Erhitzen auf 1500 °C.

Die erfindungsgemäßen feuerfesten Materialien zeichnen sich durch eine hohe Kaltdruckfestigkeit, eine geringe Porosität, eine hohe Rohdichte aus sowie eine hohe Oxidationsbeständigkeit aus.

Es konnten keine Anzeichen für eine Reoxidation des COPR-Materials gefunden werden, weder in dem entkohlten Bereich (ausgebrannter Graphit) noch im Schwarzkernbereich (intaktes Material) konnten signifikante Mengen Cr(VI) nachgewiesen werden.

## Patentansprüche

1. Feuerfeste Materialien, erhalten durch Erhitzen einer Mischung Z auf wenigstens 250 °C, bevorzugt auf wenigstens 350 °C, **dadurch gekennzeichnet, dass** die Mischung Z folgende Komponenten enthält:
• 65 bis 97 Gew.-%, bevorzugt 80 bis 97 Gew.-% einer Komponente A, wobei die Gew.-%-Angaben auf die Gesamtmasse der Komponenten A, B und, sofern vorhanden, C in der Mischung Z bezogen sind, die zu wenigstens 80 Gew.-%, bevorzugt zu wenigstens 90 Gew.-%, wobei die Gew.-%-Angaben auf die Komponente A bezogen sind, aus einem oder mehreren der Oxide ausgewählt aus der Gruppe bestehend aus Al₂O₃, ZrO₂, BeO, MgO, TiO₂, Fe₂O₃, Cr₂O₃, La₂O₃, Ta₂O₅ und SnO₂ besteht, und
• 2 bis 30 Gew.-%, bevorzugt 3 bis 15 Gew.-% einer Komponente B, wobei die Gew.-%-Angaben auf die Gesamtmasse der Komponenten A, B und, sofern vorhanden, C in der Mischung Z bezogen sind, und die Komponente B zu wenigstens 80 Gew.-%, bevorzugt zu wenigstens 85 Gew.-%, besonders bevorzugt zu wenigstens 90 Gew.-%, wobei die Gew.-%-Angaben auf die Komponente B bezogen sind, einen Mischkristall mit Spinell-Struktur enthält, der wenigstens die Oxide Fe₂O₃, Al₂O₃, MgO und Cr₂O₃ enthält, und
• 0 bis 25 Gew.-%, bevorzugt 0 bis 15 Gew.-% einer Komponente C, wobei die Gew.-%-Angaben die Gesamtmasse der Komponenten A, B und, sofern vorhanden, C in der Mischung Z bezogen sind, die zu wenigstens 86 Gew.-%, bevorzugt zu wenigstens 92 Gew.-%, wobei die Gew.-%-Angaben auf die Komponente C bezogen sind, Kohlenstoff enthält.

2. Feuerfeste Materialien gemäß Anspruch 1, **dadurch gekennzeichnet, dass** der Mischkristall mit Spinell-Struktur der Komponente B einen Gitterparameter von 822 pm bis 835 pm aufweist.

3. Feuerfeste Materialien gemäß einem der Ansprüche 1 oder 2, **dadurch gekennzeichnet, dass** der Mischkristall mit Spinell-Struktur der Komponente B
• 30 bis 80 Gew.-%, bevorzugt 40 bis 68 Gew.-%, Fe₂O₃,
• 10 bis 60 Gew.-%, bevorzugt 15 bis 43 Gew.-%, Al₂O₃,
• 5 bis 55 Gew.-%, bevorzugt 10 bis 38 Gew.-%, MgO und
• 5 bis 55 Gew.-%, bevorzugt 7 bis 35 Gew.-%, Cr₂O₃,
enthält, wobei die Gew.-% bezogen sind auf die Masse des Mischkristalls mit Spinell-Struktur.

4. Feuerfeste Materialien gemäß einem der Ansprüche 1 bis 3, **dadurch gekennzeichnet, dass** die Komponente B nach einem Reduktionverfahren erhalten wurde, bevorzugt nach einem Verfahren enthaltend die Schritte
i) Mischen eines oxidischen Feststoffes, enthaltend die Oxide Fe₂O₃, Al₂O₃, MgO und Cr₂O₃ und enthaltend Cr(VI), bevorzugt bis zu 80000 ppm Cr(VI), besonders bevorzugt bis zu 50000 ppm Cr(VI), mit einer kohlenstoffhaltigen, im Bereich von 20 bis 100 °C flüssigen Verbindung,
ii) Behandeln der nach i) erhaltenen Mischung unter Schutzatmosphäre in einem indirekt beheizten Reaktor bei einer Temperatur von 700 °C bis 1100 °C, besonders bevorzugt bei einer Temperatur von 800 °C bis 1000 °C,
iii) Abkühlen des nach ii) erhaltenen Reaktionsproduktes unter Schutzatmosphäre auf wenigstens 300 °C, vorzugsweise auf wenigstens 150 °C.

5. Feuerfeste Materialien gemäß einem der Ansprüche 1 bis 4, **dadurch gekennzeichnet, dass** die Komponente B weniger als 640 ppb Cr(VI), bevorzugt weniger als 107 ppb Cr(VI) enthält.

6. Feuerfeste Materialien gemäß einem der Ansprüche 1 bis 5, **dadurch gekennzeichnet, dass** die Gesamtmasse der Komponenten A, B und, sofern vorhanden, C wenigstens 50 Gew.-%, bevorzugt wenigstens 65 Gew.-%, besonders bevorzugt wenigstens 75 Gew.% der Gesamtmasse der Mischung Z beträgt.

7. Feuerfeste Materialien gemäß einem der Ansprüche 1 bis 6, **dadurch gekennzeichnet, dass** die Komponente A zu wenigstens 80 Gew.-%, bevorzugt zu wenigstens 90 Gew.-%, wobei die Gew.-%-Angaben auf die Komponente A bezogen sind, aus Al₂O₃ besteht.

8. Feuerfeste Materialien gemäß einem der Ansprüche 1 bis 6, **dadurch gekennzeichnet, dass** die Komponente A zu wenigstens 80 Gew.-%, bevorzugt zu wenigstens 90 Gew.-%, wobei die Gew.-%-Angaben auf die Komponente A bezogen sind, aus MgO besteht.

9. Feuerfeste Materialien gemäß einem der Ansprüche 1 bis 8, **dadurch gekennzeichnet, dass** die Mischung Z 0.5 bis 25 Gew.-%, bevorzugt 1 bis 15 Gew.-%, wobei die Gew.-%-Angaben auf die Gesamtmasse der Komponenten A, B und C in der Mischung Z bezogen sind, der Komponente C enthält.

10. Feuerfeste Materialien gemäß einem der Ansprüche 1 bis 9, **dadurch gekennzeichnet, dass** als Komponente C Graphit oder Ruß oder Mischungen davon, bevorzugt Graphit, eingesetzt wird.

11. Feuerfeste Materialien gemäß einem der Ansprüche 1 bis 10, **dadurch gekennzeichnet, dass** die Mischung Z als Formkörper eingesetzt wird.

12. Feuerfeste Materialien gemäß einem der Ansprüche 1 bis 11, **dadurch gekennzeichnet, dass** die Mischung Z weniger als 11 Gew.-% SiO₂, bevorzugt weniger als 5 Gew.-% SiO₂, wobei die Gew.-%-Angaben auf die Gesamtmasse der Komponenten A, B und, sofern vorhanden, C in der Mischung Z bezogen sind, enthält.

13. Feuerfeste Materialien gemäß einem der Ansprüche 1 bis 12, **dadurch gekennzeichnet, dass** die Mischung Z bis zu 25 Gew.-%, bevorzugt bis zu 10 Gew.-%, wobei die Gew.-% auf die Gesamtmasse der Mischung Z bezogen sind, einer weiteren Komponente D enthält, wobei Komponente D ein oder mehrere Bindemittel ist, bevorzugt ausgewählt aus der Gruppe der Tone, Tonerdezemente, der anorganischen Phosphate, Alkalisilikate, Ethylsilikate, anorganischen Sulfate, Boroxide, verkokende Bindemittel, bevorzugt Pech oder Kunstharze oder Mischungen davon, Stärke und Ligninsulfonate.

14. Feuerfeste Materialien gemäß einem der Ansprüche 1 bis 13, **dadurch gekennzeichnet, dass** die Mischung Z auf wenigstens 800 °C, bevorzugt auf wenigstens 1200 °C, besonders bevorzugt auf wenigstens 1450 °C erhitzt wird.

15. Verwendung der feuerfesten Materialien gemäß nach einem der Ansprüche 1 bis 14 für die Auskleidung von Anlagen für thermische Prozesse sowie von Transportgefäßen, für den Bau von Konstruktionselementen wie verschleißfesten, technischen und/ oder mechanischen Bauteilen, für die Wärmerückgewinnung und für die Wärmedämmung.
